# EUROPEAN PATENT APPLICATION

(11) **EP 3 065 241 A1**
(43) Date of publication of application: **07.09.2016**
(21) Application number: 14869519.0
(22) Date of filing: 17.02.2014
(51) Int. Cl.: H02G 1/06, B65H 51/04, H01B 13/012, H02G 1/14, H01R 43/28

(54) **POWER LINE CORRECTING DEVICE**

(30) Priority: 11.12.2013 JP 2013256050
(71) Applicant: Sumitomo Wiring Systems, Ltd., Yokkaichi-shi, Mie 510-8503 (JP)
(72) Inventor: KATOU, Junichi, Yokkaichi-shi Mie 510-8503 (JP)
(74) Representative: Horn Kleimann Waitzhofer Patentanwälte PartG mbB
(86) International application number: PCT/JP2014/053591
(87) International publication number: WO 2015/087557

(57) **Abstract**

An object of the present invention is to straighten a wire such that twisting of the wire does not accumulate to prevent tangling of the wire when the wire is unwound from a bobbin installed in a horizontal state while gyrating. A roller supporting portion supports rotating shaft portions of a pair of rollers in a state in which a wire is sandwiched between the pair of rollers, which are rotated by following a movement of the wire, at an intermediate position that is midway in a transfer path of the wire, which is unwound from a bobbin while gyrating, and in a state in which rotation axes of the pair of rollers are kept at skew positions that are parallel with each other when viewed in a transfer direction of the wire at the intermediate position.

## Description

### Technical Field

The present invention relates to a wire straightening device for straightening twisting in a wire that is unwound from a bobbin while gyrating along the outer circumference of the bobbin.

### Background Art

In a process for manufacturing wire harnesses to be provided in vehicles such as automobiles, a wire length adjusting process for cutting a wire by a length in accordance with a required specification, that is, for adjusting the length of a wire to a necessary length is carried out. In the wire length adjusting process, a wire unwound from a bobbin around which the wire is wound is sequentially cut to a necessary length.

A bobbin around which a wire is wound sometimes called a "reel". In the following description, a wire that has been cut off in the wire length adjusting process, that is, a wire whose length is adjusted, is referred to as "length-adjusted wire".

The wire wound around the bobbin is unwound from the bobbin in a state in which the wire is bent into a curved shape. In order to facilitate handling of a length-adjusted wire cut off to a necessary length, it is required to straighten the lasting curved shape of the wire before the wire unwound from the bobbin is cut.

For example, Patent Document 1 describes a wire straightening device for straightening the lasting curved shape of a wire unwound from a bobbin (reel). This wire straightening device includes a plurality of first straightening rollers and a plurality of second straightening rollers that are alternately arranged in the longitudinal direction of a transfer path of a wire. The first straightening rollers and the second straightening rollers cause the wire to meander, and thus the lasting curved shape of the wire is straightened.

That is, the wire straightening device described in Patent Document 1 is an example of a wire bend straightening device for straightening a bend in a wire. In the apparatus described in Patent Document 1, the wire is unwound from a rotating reel.

### Citation List

### Patent Document

Patent Document 1: JP 2013-9047A

### Summary of Invention

### Technical Problem

In the wire length adjusting process, there are cases where a bobbin around which a wire is wound is installed in a horizontal (laid-down) state, and the wire is unwound from the bobbin while gyrating along the outer circumference of the bobbin. In this case, a mechanism for rotatably supporting the bobbin is not needed, and thus an apparatus for the wire length adjusting process is simplified.

When a wire is unwound from a bobbin while gyrating, the unwound wire is slightly twisted. Moreover, when a wire is continuously unwound from a bobbin installed in a horizontal state and is continuously transferred while coming into contact with a guiding portion for guiding the wire including a rotating roller, a path narrowing portion, and the like, the twisting of the wire accumulates at a portion of the transfer path of a wire.

If the twisting of the wire accumulates at a portion of the transfer path of a wire, there are disadvantageous situations in which the length-adjusted wires are twisted and a portion of the wire forms a ring-shaped tangle, for example. The ring-shaped tangle of the wire causes clogging of the guiding portion.

An object of the present invention is to straighten a wire such that the twisting of the wire does not accumulate, thereby preventing the tangling of the wire (or kinks) when the wire is unwound from a bobbin installed in a horizontal state while gyrating.

### Solution to Problem

A wire straightening device according to a first aspect includes a pair of rollers and a roller supporting portion. Each of the pair of rollers is rotatably supported. The roller supporting portion supports rotating shaft portions of the pair of rollers at an intermediate position that is midway in a transfer path of a wire unwound from a bobbin around which the wire is wound while gyrating along an outer circumference of the bobbin. The roller supporting portion supports the rotating shaft portions of the pair of rollers in a state in which the wire is sandwiched between the pair of rollers, which are rotated by following a movement of the wire, and in a state in which rotation axes of the pair of rollers are kept at skew positions that are in parallel with each other when viewed in a transfer direction of the wire at the intermediate position.

A wire straightening device according to a second aspect is an aspect of the wire straightening device according to the first aspect. In the wire straightening device according to the second aspect, the roller supporting portion supports the rotating shaft portions in a state in which one of the rotation axes of the pair of rollers is kept in parallel with a line that is orthogonal to a transfer direction of the wire at the intermediate position.

A wire straightening device according to a third aspect is an aspect of the wire straightening device according to the first aspect or the second aspect. In the wire straightening device according to the third aspect, the roller supporting portion includes an elastic member for maintaining the pair of rollers by elastic force in a state in which the wire is sandwiched between the pair of rollers.

A wire straightening device according to a fourth aspect is an aspect of the wire straightening device according to any one of the first aspect to the third aspect. In the wire straightening device according to the fourth aspect, outer circumferential surfaces of the pair of rollers for coming into contact with the wire are smooth circumferential surfaces.

### Advantageous Effects of the Invention

In the above-mentioned aspects, the pair of rollers are rotatably supported in a state in which the rotation axes thereof are kept at skew positions. The wire unwound from the bobbin while gyrating is sandwiched by the pair of rollers midway in the transfer path, and the pair of rollers are rotated by following the movement of the wire. Accordingly, it is found that the twisting of the wire can be straightened such that the twisting of the wire does not accumulate. As a result, it is possible to prevent tangling the wire caused by the twisting of the wire.

### Brief Description of Drawings

FIG. 1 is a schematic configuration diagram of a wire length adjusting apparatus including a wire twist straightening device 1 according to an embodiment.
FIG. 2 is a front view of the wire twist straightening device 1.
FIG. 3 is a cross-sectional plan view of the wire twist straightening device 1.
FIG. 4 is a cross-sectional plan view of the wire twist straightening device 1 in a state in which a pair of rollers are separated from each other.
FIG. 5 is a first side view of the wire twist straightening device 1.
FIG. 6 is a second side view of the wire twist straightening device 1.
FIG. 7 is a diagram showing the side surfaces of the pair of rollers and a cross section of a path narrowing portion in the wire twist straightening device 1.

### Description of Embodiments

Hereinafter, an embodiment of the present invention will be described with reference to the attached drawings. The following embodiment is merely a specific example of the present invention, and is not to restrict the technical scope of the present invention.

### Wire length adjusting apparatus

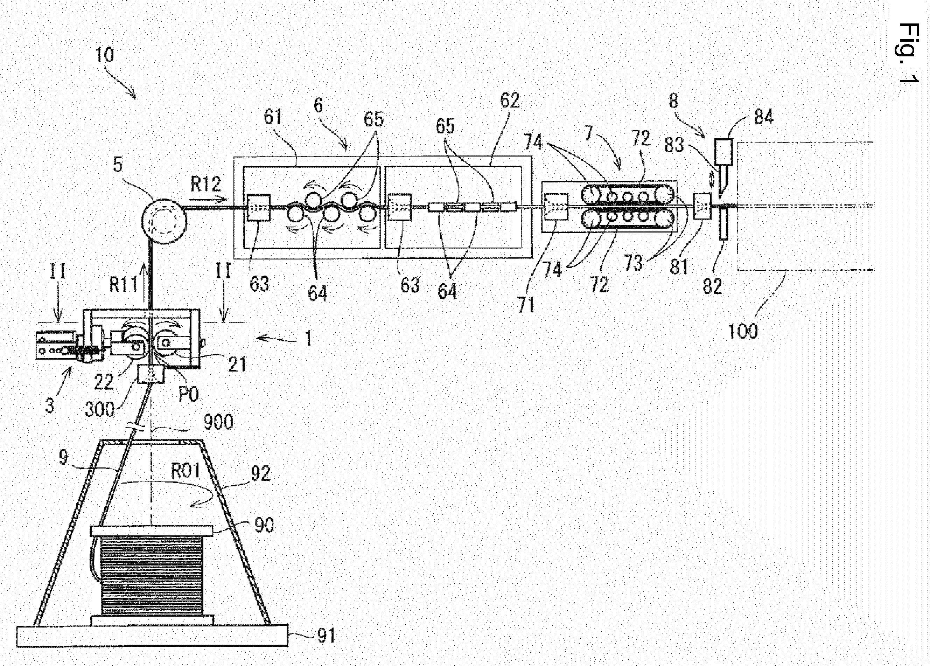

First, a wire length adjusting apparatus 10 including a wire twist straightening device 1 according to an embodiment will be described with reference to FIG. 1. The wire length adjusting apparatus 10 is an apparatus for sequentially cutting a wire 9 that is unwound from a bobbin 90 around which the wire 9 is wound by a length in accordance with a required specification.

As shown in FIG. 1, the wire length adjusting apparatus 10 includes the wire twist straightening device 1, a fixed pulley 5, a wire bend straightening device 6, a wire transfer device 7, and a cutting machine 8. The wire twist straightening device 1, the fixed pulley 5, the wire bend straightening device 6, the wire transfer device 7, and the cutting machine 8 are arranged at different positions midway in a transfer path of the wire 9 unwound from the bobbin 90.

Furthermore, in the example shown in FIG. 1, the wire length adjusting apparatus 10 also includes a bobbin platform 91 and a bobbin cover 92. It should be noted that the bobbin cover 92 is shown in a cross-sectional view in FIG. 1.

### Bobbin platform

As shown in FIG. 1, the bobbin 90 around which the wire 9 is wound is installed at a predetermined position on the bobbin platform 91 or the like in a horizontal state, for example. The wire 9 is unwound from the bobbin 90 while gyrating along the outer circumference of the bobbin 90. Therefore, the wire length adjusting apparatus 10 does not need to include an extensive mechanism for rotatably supporting the bobbin 90, and thus is a relatively simple device.

### Bobbin cover

The bobbin cover 92 is a hollow member for covering the bobbin 90 installed in a horizontal state. The bobbin cover 92 is provided with an opening 920 through which the wire 9 unwound from the bobbin 90 passes. The bobbin cover 92 prevents objects around the bobbin 90 from being caught by the wire 9 unwound from the bobbin 90.

### Outline of wire twist straightening device

The wire twist straightening device 1 is a device for straightening the twisting of the wire 9, which is unwound from the bobbin 90 while gyrating, such that the twisting of the wire 9 does not accumulate. In this embodiment, the wire twist straightening device 1 is arranged downstream from the position of the bobbin 90 and upstream of the position of the fixed pulley 5 in the transfer path of the wire 9.

The wire twist straightening device 1 is an example of a wire straightening device including a pair of rollers 21 and 22 and a roller supporting portion 3. The wire twist straightening device 1 will be described in detail later.

### Fixed pulley

The fixed pulley 5 is a pulley for switching a transfer direction of the wire 9, which is unwound from the bobbin 90 and transferred in a first transfer direction R11, to a second transfer direction R12. In this embodiment, the fixed pulley 5 is arranged downstream from the position of the wire twist straightening device 1 and upstream of the position of the wire bend straightening device 6 in the transfer path of the wire 9.

In this embodiment, the first transfer direction R11 is substantially a vertically upward direction, and the second transfer direction R12 is substantially a horizontal direction.

### Wire bend straightening device

The wire bend straightening device 6 is a device for straightening the bending in the wire 9. In this embodiment, the wire bend straightening device 6 is arranged downstream from the position of the bobbin 90 and upstream of the position of the fixed pulley 5 in the transfer path of the wire 9.

The wire bend straightening device 6 includes a first bend straightening portion 61 and a second bend straightening portion 62 that include the same components. The first bend straightening portion 61 and the second bend straightening portion 62 are arranged in a state in which their orientations with respect to the circumferential direction are tilted with respect to each other by 90 degrees around the transfer direction of the wire 9. Accordingly, the first bend straightening portion 61 and the second bend straightening portion 62 straighten the bends of the wire 9 in two transverse directions that are orthogonal to each other.

The first bend straightening portion 61 and the second bend straightening portion 62 each include a path narrowing portion 63, a plurality of first straightening rollers 64, and a plurality of second straightening rollers 65.

The path narrowing portion 63 is a member provided with a wire path whose width is gradually reduced toward an exit side from an entrance side. The path narrowing portion 63 guides the wire 9 transferred via the fixed pulley 5 to a path extending toward the first straightening roller 64 at the first position.

The first straightening rollers 64 and the second straightening rollers 65 are alternately arranged along the transfer path of the wire 9, and cause the wire 9 to meander along the outer circumferential surfaces of the rollers. Thus, the bends of the wire 9 are straightened.

### Wire transfer device

The wire transfer device 7 is a device for bringing the wire 9 from the previous process side and feeding the wire 9 to the subsequent process side in the transfer path. Each time the cutting machine 8 on the subsequent process side cuts the wire 9, the wire transfer device 7 transfers the wire 9 having a length in accordance with a required specification to the subsequent process side.

In the example shown in FIG. 1, the wire transfer device 7 includes a path narrowing portion 71, a pair of endless belts 72 that are arranged so as to be opposed to each other, a pair of driving rollers 73, and a plurality of driven rollers 74.

The path narrowing portion 71 is a member similar to the path narrowing portion 63, and guides the wire 9 transferred via the wire bend straightening device 6 to between the pair of endless belts 72.

The pair of endless belts 72 are arranged on both sides of the transfer path of the wire 9, and are rotated in a state in which the wire 9 is sandwiched therebetween. Accordingly, the pair of endless belts 72 bring the wire 9 from the previous process side and feed the wire 9 to the subsequent process side. The endless belts 72 are members having a large frictional resistance, such as rubber members.

The pair of driving rollers 73 rotate the pair of endless belts 72, and maintain portions of the pair of endless belts 72 in a state in which the wire 9 is sandwiched therebetween. The driven rollers 74 maintain the portions of the pair of endless belts 72 in a state in which the wire 9 is sandwiched therebetween.

### Cutting machine

The cutting machine 8 is a mechanism for cutting the wire 9 in the transfer path of the wire 9. In the example shown in FIG. 1, the cutting machine 8 includes a path narrowing portion 81, a wire supporting portion 82, a cutter 83, and a cutter driving portion 84.

The path narrowing portion 81 is a member similar to the path narrowing portion 63, and guides the wire 9 fed from the wire transfer device 7 to a position along the wire supporting portion 82.

The wire supporting portion 82 supports a part of the wire 9 to be cut from the side. The cutter 83 is driven by the cutter driving portion 84, and thus cuts the part of the wire 9 supported by the wire supporting portion 82. The cutter driving portion 84 displaces the cutter 83 between a cutting position at which the cutter 83 comes into contact with the wire 9 and a waiting position that is separated from the wire 9.

A length-adjusted wire processing apparatus 100 for processing the wire 9 cut off by the wire length adjusting apparatus 10 is arranged at a position for a process subsequent to the process performed by the wire length adjusting apparatus 10. The length-adjusted wire processing apparatus 100 is a crimping apparatus for crimping crimp terminals to both ends of the cut-out wire 9, for example.

### Details of wire twist straightening device

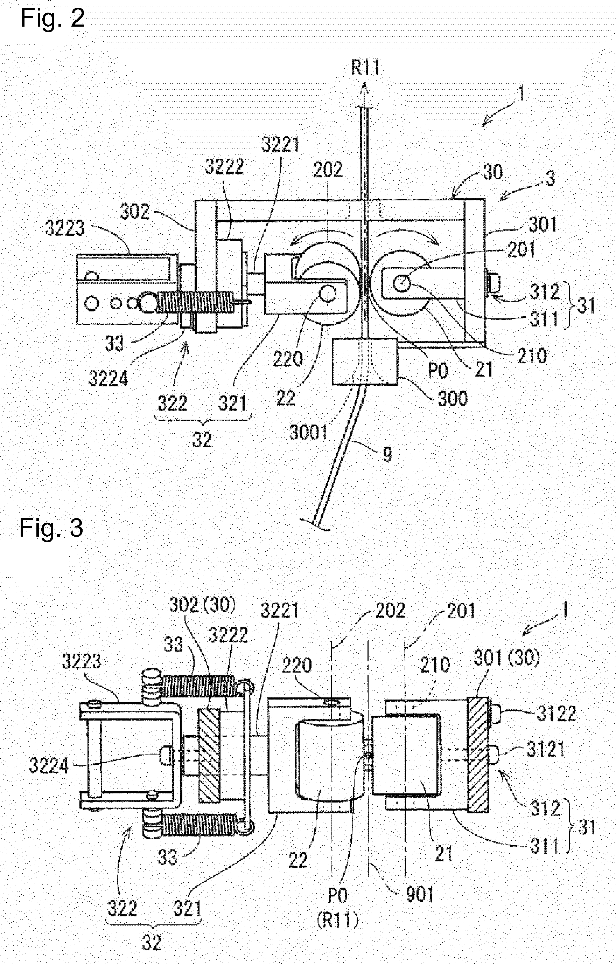

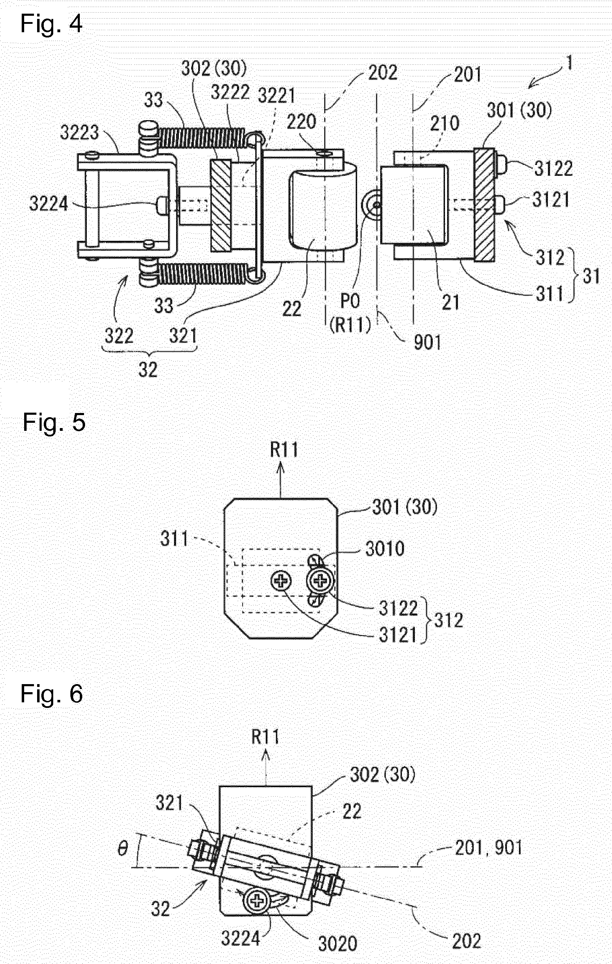

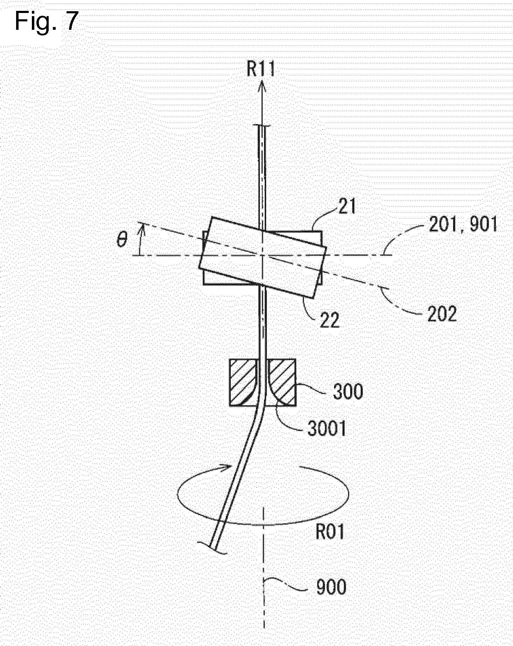

Next, the wire twist straightening device 1 will be specifically described with reference to FIGS. 2 to 7. FIG. 2 is a front view of the wire twist straightening device 1. FIG. 3 is a cross-sectional plan view of the wire twist straightening device 1 showing a cut through plane II-II shown in FIG. 1. FIG. 4 is a cross-sectional plan view of the wire twist straightening device 1 in a state in which the pair of rollers 21 and 22 are separated from each other. FIG. 5 is a first side view of the wire twist straightening device 1. FIG. 6 is a second side view of the wire twist straightening device 1. FIG. 7 is a diagram showing the side surfaces of the pair of rollers 21 and 22 and a cross section of a path narrowing portion 300 in the wire twist straightening device 1. It should be noted that the path narrowing portion 300 is a part of the wire twist straightening device 1.

As described above, the wire twist straightening device 1 includes the pair of rollers 21 and 22, and the roller supporting portion 3. Furthermore, the wire twist straightening device 1 also includes the path narrowing portion 300.

The pair of rollers 21 and 22 constitute a roller pair for straightening the wire 9 such that the twisting of the wire 9 does not accumulate. The pair of rollers 21 and 22 include a first roller 21 and a second roller 22.

The path narrowing portion 300 is a member that is similar to the path narrowing portion 63 and is provided with a wire path 3001 whose width is gradually reduced toward an exit side from an entrance side. The path narrowing portion 300 guides the gyrating wire 9 that has been unwound from the bobbin 90 to an intermediate position P0 that is midway in the transfer path of the wire 9.

### Pair of rollers

The pair of rollers 21 and 22 are rotatably supported by the rotating shaft portions 210 and 220, respectively, in a state in which the rollers 21 and 22 are opposed to each other at the intermediate position P0 midway in the transfer path of the wire 9. In the following description, the rotating shaft of the first roller 21 is referred to as "first rotating shaft portion 210", and the rotating shaft of the second roller 22 is referred to as "second rotating shaft portion 220".

Furthermore, the pair of rollers 21 and 22 are supported by the roller supporting portion 3 at positions at which a portion of the wire 9 located at the intermediate position P0 is sandwiched from both its sides between the rollers 21 and 22. Therefore, the pair of rollers 21 and 22 are rotated by following the movement of the wire 9 during the transfer.

In this embodiment, the outer circumferential surfaces of the pair of rollers 21 and 22 that come into contact with the wire 9 are smooth circumferential surfaces. The outer circumferential surfaces of the pair of rollers 21 and 22 are metal surfaces including a metal material such as iron, stainless steel, and aluminum, for example.

In the following description, the rotation center of the first roller 21 is referred to as "first rotation axis 201", and the rotation center of the second roller 22 is referred to as "second rotation axis 202".

In this embodiment, the bobbin 90 is installed on the bobbin platform 91 such that a center line 900 of the bobbin 90 approximately coincides with the transfer path of the wire 9 at the intermediate position P0.

### Roller supporting portion

The roller supporting portion 3 is a mechanism for supporting the rotating shaft portions 210 and 220 of the pair of rollers 21 and 22. The roller supporting portion 3 supports the first rotating shaft portion 210 and the second rotating shaft portion 220 in a state in which the wire 9 is sandwiched between the pair of rollers 21 and 22, which are rotated by following the movement of the wire 9.

Furthermore, as shown in FIGS. 3 and 5, the roller supporting portion 3 supports the first rotating shaft portion 210 and the second rotating shaft portion 220 in a state in which the first rotation axis 201 and the second rotation axis 202 are kept at skew positions that are parallel with each other when viewed in the direction (first transfer direction R11) along the transfer path at the intermediate position P0.

FIG. 3 shows that the first rotation axis 201 and the second rotation axis 202 are parallel with each other when viewed in the first transfer direction R11, which is a transfer direction at the intermediate position P0. Furthermore, FIGS. 5 and 7 show that the first rotation axis 201 and the second rotation axis 202 have a skew positional relationship in which the skew angle is θ.

In the following description, a straight line that is orthogonal to the first transfer direction R11 at the intermediate position P0 and that is parallel with the first rotation axis 201 and the second rotation axis 202 when viewed in the first transfer direction R11 is referred to as "intermediate position orthogonal line 901".

Next, the roller supporting portion 3 will be specifically described. In this embodiment, the roller supporting portion 3 includes a fixed support 30, a first roller supporting portion 31, and a second roller supporting portion 32.

### Roller supporting portion: fixed supporting portion

The fixed support 30 includes a first fixed supporting portion 301 for supporting the first roller supporting portion 31 and a second fixed supporting portion 302 for supporting the second roller supporting portion 32.

### Roller supporting portion: first roller supporting portion

The first roller supporting portion 31 includes a first rotating shaft supporting portion 311 for supporting the first rotating shaft portion 210, and a first coupling portion 312 for coupling the first rotating shaft supporting portion 311 to the first fixed supporting portion 301.

More specifically, as shown in FIGS. 2, 3, and 5, the first coupling portion 312 includes a first rotary coupling portion 3121 and a first fixing screw 3122. The first rotary coupling portion 3121 couples the first rotating shaft supporting portion 311 to the first fixed supporting portion 301 in a state in which the skew angle of the first rotation axis 201 with respect to the intermediate position orthogonal line 901 can be changed.

In this embodiment, the first rotary coupling portion 3121 couples the first rotating shaft supporting portion 311 to the first fixed supporting portion 301 in a state in which the first rotating shaft supporting portion 311 can be rotated around the direction in which the pair of rollers 21 and 22 are opposed to each other. The first rotating shaft supporting portion 311 and the first roller 21 are rotated together with the rotation of the first rotary coupling portion 3121.

The first fixing screw 3122 fixes the first rotating shaft supporting portion 311 to the first fixed supporting portion 301, and thus keeps the skew angle of the first rotation axis 201 with respect to the intermediate position orthogonal line 901 at a desired angle. Therefore, as shown in FIG. 5, the first fixed supporting portion 301 has a first elongated hole portion 3010 that is a portion provided with an arc-shaped elongated hole through which the shaft portion of the first fixing screw 3122 passes.

### Roller supporting portion: second roller supporting portion

On the other hand, the second roller supporting portion 32 includes a second rotating shaft supporting portion 321 for supporting the second rotating shaft portion 220 of the second roller 22, and a second coupling portion 322 for coupling the second rotating shaft supporting portion 321 to the second fixed supporting portion 302 while applying to the second rotating shaft supporting portion 321 an elastic force toward the first roller 21 side.

More specifically, as shown in FIGS. 2, 3, and 6, the second coupling portion 322 includes a second rotary coupling portion 3221, a rotary interlocked portion 3222, a handle portion 3223, and a second fixing screw 3224. The second rotary coupling portion 3221 couples the second rotating shaft supporting portion 321 to the second fixed supporting portion 302 in a state in which the skew angle of the second rotation axis 202 with respect to the intermediate position orthogonal line 901 can be changed.

In this embodiment, the second rotary coupling portion 3221 couples the second rotating shaft supporting portion 321 to the second fixed supporting portion 302 in a state in which the second rotating shaft supporting portion 321 can be rotated around the direction in which the pair of rollers 21 and 22 are opposed to each other and displaced in the direction in which the pair of rollers 21 and 22 are opposed to each other.

The second rotating shaft supporting portion 321 and the second roller 22 are rotated together with the rotation of the second rotary coupling portion 3221, and displaced together with the displacement of the second rotary coupling portion 3221.

The rotary interlocked portion 3222 is a portion that is rotated together with the rotation of the second rotary coupling portion 3221. However, the rotary interlocked portion 3222 is not displaced together with the displacement of the second rotary coupling portion 3221 in the direction in which the pair of rollers 21 and 22 are opposed to each other.

The handle portion 3223 is fixed to a portion of the second rotary coupling portion 3221 that is on a side opposite to the portion coupled to the second rotating shaft supporting portion 321. Accordingly, the second rotating shaft supporting portion 321 and the second roller 22 are rotated together with the rotation of the handle portion 3223, and displaced together with the displacement of the handle portion 3223.

The second fixing screw 3224 fixes the rotary interlocked portion 3222 to the second fixed supporting portion 302, and thus keeps the skew angle of the second rotation axis 202 with respect to the intermediate position orthogonal line 901 at a desired angle. Therefore, as shown in FIG. 6, the second fixed supporting portion 302 has a second elongated hole portion 3020 that is a portion provided with an arc-shaped elongated hole through which the shaft portion of the second fixing screw 3224 passes.

For example, the first roller supporting portion 31 maintains a state in which the skew angle of the first rotation axis 201 with respect to the intermediate position orthogonal line 901 is 0 degree, that is, a state in which the first rotation axis 201 and the intermediate position orthogonal line 901 are parallel with each other. In this case, the second roller supporting portion 32 maintains a state in which the skew angle of the second rotation axis 202 with respect to the intermediate position orthogonal line 901 is an acute angle θ.

In the case of the above-mentioned example, as shown in FIG. 7, a state is maintained in which the first rotation axis 201 and the second rotation axis 202 are parallel with each other as viewed in the first transfer direction R11 at the intermediate position P0 and are located at skew positions that form a skew angle of an acute angle θ.

Furthermore, the second coupling portion 322 includes elastic members 33. The elastic members 33 are springs, for example. The elastic members 33 may also be rubber members.

The elastic members 33 apply to the second rotating shaft supporting portion 321 an elastic force toward the first roller 21 side, and thus maintains the pair of rollers 21 and 22 in a state in which the wire 9 is sandwiched therebetween. In this embodiment, the elastic members 33 are linked to the rotary interlocked portion 3222 and the handle portion 3223. In this case, the elastic members 33 apply elastic force to the second rotating shaft supporting portion 321 via the handle portion 3223 and the second rotary coupling portion 3221.

Therefore, when the handle portion 3223 is operated with force against the elastic force applied to the handle portion 3223 by the elastic member 33, the second roller 22, the second rotating shaft supporting portion 321, and the second rotary coupling portion 3221 are displaced away from the first roller 21. Accordingly, as shown in FIG. 4, the pair of rollers 21 and 22 can be separated from each other from the state in which the wire 9 is sandwiched therebetween.

### Effects

In the wire twist straightening device 1, the pair of rollers 21 and 22 are rotatably supported in a state in which their rotation axes are kept at skew positions. The wire 9 unwound from the bobbin 90 while gyrating is sandwiched between the pair of rollers 21 and 22 midway in the transfer path, and the pair of rollers 21 and 22 are rotated by following the movement of the wire. It is found that adopting this wire twist straightening device 1 makes it possible to straighten the twisting of the wire 9 such that the twisting of the wire 9 does not accumulate. As a result, tangling of the wire 9 caused by the twisting of the wire 9 can be prevented, and in turn, clogging of the path narrowing portion and the roller caused by the tangled wire 9 can be prevented.

### Example of positional relationship between rotation axes of pair of rollers

Next, an effective example of the positional relationship between the rotation axes of the pair of rollers 21 and 22 based on the results of an experiment performed using the wire twist straightening device 1 will be described with reference to FIG. 7. The example described below is an example of the positional relationship between the rotation axes of the pair of rollers 21 and 22 that can provide an effect of straightening the wire 9 such that the twisting of the wire 9 does not accumulate.

In the following description, the gyrating direction of the wire 9 when viewed from a point in the direction in which the wire 9 is unwound from the bobbin 90 is referred to as "wire gyrating direction R01".

As described above, the first rotation axis 201 and the second rotation axis 202 are kept at skew positions that are parallel with each other when viewed in the transfer direction (first transfer direction R11) of the wire 9 at the intermediate position P0.

For example, if the wire gyrating direction R01 is a right-handed direction (clockwise direction), the rotation axes of the pair of rollers 21 and 22 may be kept as follows. That is, the rotation axis of at least one roller of the pair of rollers 21 and 22 may be maintained in a state in which that rotation axis forms an acute angle θ in the right-handed direction (clockwise direction) with respect to the intermediate position orthogonal line 901 when viewed from the side on which the roller is opposed to the wire 9. Accordingly, the accumulation of the twisting of the wire 9 can be prevented.

It should be noted that the "side on which the roller is opposed to the wire 9" can also be expressed by another expression such as "side on which the roller is in contact with the wire 9" and "side on which the roller is located with respect to the wire 9".

That is, if the rotation axis (201 or 202) of at least one roller of the pair of rollers 21 and 22 is maintained in a state in which that rotation axis forms an acute angle θ in the same rotation direction as the wire gyrating direction R01 with respect to the intermediate position orthogonal line 901 when viewed from the side on which the roller is opposed to the wire 9, the accumulation of the twisting of the wire 9 can be prevented.

The example shown in FIG. 7 is an example in which the wire gyrating direction R01 is a right-handed direction. In the example shown in FIG. 7, the first rotation axis 201 is kept in parallel with the intermediate position orthogonal line 901, and the second rotation axis 202 is maintained in a state in which the second rotation axis 202 forms an acute angle θ in the right-handed direction, which is the same as the wire gyrating direction R01, with respect to the intermediate position orthogonal line 901 when viewed from the side on which the second roller 22 is opposed to the wire 9. The acute angle θ is set in a range of about 2 degrees to about 10 degrees depending on the type of wire 9, for example.

### Application examples

In the wire twist straightening device 1, both the first rotation axis 201 and the second rotation axis 202 may also be maintained in a state in which the rotation axes form an acute angle θ in the same rotation direction as the wire gyrating direction R01 with respect to the intermediate position orthogonal line 901 when viewed from the side on which the corresponding roller (21 or 22) is opposed to the wire 9.

For example, if the wire gyrating direction R01 is a right-handed direction, the rotation axes of the pair of rollers 21 and 22 may be kept as follows. That is, the first rotation axis 201 is maintained in a state in which the rotation axis 201 forms an acute angle θ/2 in the right-handed direction with respect to the intermediate position orthogonal line 901 when viewed from the side on which the first roller 21 is opposed to the wire 9. Furthermore, the second rotation axis 202 is maintained in a state in which the rotation axis 202 forms an acute angle θ/2 in the right-handed direction with respect to the intermediate position orthogonal line 901 when viewed from the side on which the second roller 22 is opposed to the wire 9.

It should be noted that the wire straightening device according to the present invention can be configured by freely combining the above-described embodiment and application examples, or modifying the embodiment and application examples or omitting a portion thereof as appropriate, within the scope of the present invention described in claims.

### Reference Signs List

1 Wire twist straightening device (wire straightening device)
10 Wire length adjusting apparatus
100 Length-adjusted wire processing device
201 First rotation axis (rotation axis of first roller)
202 Second rotation axis (rotation axis of second roller)
21 First roller (one of pair of rollers)
210 First rotating shaft portion (rotating shaft portion of first roller)
22 Second roller (the other of pair of rollers)
220 Second rotating shaft portion (rotating shaft portion of second roller)
3 Roller supporting portion
30 Fixed support
300 Path narrowing portion
3001 Wire path
301 First fixed supporting portion
3010 First elongated hole portion
302 Second fixed supporting portion
3020 Second elongated hole portion
31 First roller supporting portion
311 First rotating shaft supporting portion
312 First coupling portion
3121 First rotary coupling portion
3122 First fixing screw
32 Second roller supporting portion
321 Second rotating shaft supporting portion
322 Second coupling portion
3221 Second rotary coupling portion
3222 Rotary interlocked portion
3223 Handle portion
3224 Second fixing screw
33 Elastic member
5 Fixed pulley
6 Wire bend straightening device
61 First bend straightening portion
62 Second bend straightening portion
63 Path narrowing portion
64 First straightening roller
65 Second straightening roller
7 Wire transfer device
71 Path narrowing portion
72 Endless belt
73 Driving roller
74 Driven roller
8 Cutting machine
81 Path narrowing portion
82 Wire supporting portion
83 Cutter
84 Cutter driving portion
9 Wire
90 Bobbin
900 Center line of bobbin
901 Intermediate position orthogonal line
91 Bobbin platform
92 Bobbin cover
920 Opening of bobbin cover
P0 Intermediate position
R01 Wire gyrating direction
R11 First transfer direction
R12 Second transfer direction

## Claims

1. A wire straightening device comprising:
a pair of rollers that are each rotatably supported; and
a roller supporting portion for supporting rotating shaft portions of the pair of rollers in a state in which a wire is sandwiched between the pair of rollers, which are rotated by following a movement of the wire, at an intermediate position that is midway in a transfer path of the wire, which is unwound from a bobbin around which the wire is wound while gyrating along an outer circumference of the bobbin, and in a state in which rotation axes of the pair of rollers are kept at skew positions that are parallel with each other when viewed in a transfer direction of the wire at the intermediate position.

2. The wire straightening device according to claim 1, wherein the roller supporting portion supports the rotating shaft portions in a state in which one of the rotation axes of the pair of rollers is kept in parallel with a line that is orthogonal to a transfer direction of the wire at the intermediate position.

3. The wire straightening device according to claim 1 or 2, wherein the roller supporting portion includes an elastic member for maintaining the pair of rollers by elastic force in a state in which the wire is sandwiched between the pair of rollers.

4. The wire straightening device according to any one of claims 1 to 3, wherein outer circumferential surfaces of the pair of rollers for coming into contact with the wire are smooth circumferential surfaces.
